# EUROPÄISCHE PATENTANMELDUNG

(11) **EP 2 380 670 A2**
(43) Veröffentlichungstag der Anmeldung: **26.10.2011**
(21) Anmeldenummer: 11003386.7
(22) Anmeldetag: 21.04.2011
(51) Int. Cl.: B08B 1/00, B08B 3/02, F24J 2/46

(54) **Reinigungsvorrichtung**

(30) Priorität: 23.04.2010 DE 102010018010
(71) Anmelder: Jäger, Anton, 89250 Senden (DE)
(72) Erfinder: Jäger, Anton, 89250 Senden (DE)
(74) Vertreter: Manitz, Finsterwald & Partner GbR

(57) **Zusammenfassung**

Die Erfindung betrifft eine Vorrichtung zum Reinigen von insbesondere geneigten Flächen, insbesondere von Solar- oder Photovoltaikanlagenflächen auf Dächern von Gebäuden, mit einem Träger (11) und wenigstens einem am Träger (11) gehaltenen, angetriebenen Endlosreinigungsband (13).

## Beschreibung

Die Erfindung betrifft eine Vorrichtung zum Reinigen von insbesondere geneigten Flächen, insbesondere von Solar- oder Photovoltaikanlagenflächen auf Dächern von Gebäuden.

Derartige Flächen werden typischerweise entweder mit Handbürsten oder einfachen rotierenden Bürsten gereinigt, wobei der Rotationsantrieb zum Teil elektrisch erfolgt, um den Benutzer zu entlasten. Eine derartige manuelle Reinigung ist aber in jedem Fall zeitraubend und mühselig. Die Handreinigung erweist sich vor allem dann als zumindest schwierig, wenn nicht sogar praktisch undurchführbar, wenn es sich bei den zu reinigenden Flächen um solche auf geneigten Gebäudedächem handelt, was bei Solar- oder Photovoltaikanlagenflächen regelmäßig der Fall ist. Die manuelle Reinigung stößt auch dann an ihre Grenzen, wenn sehr große Flächen gereinigt werden müssen.

Aufgabe der Erfindung ist es, eine für den Benutzer einfache und gleichzeitig wirtschaftliche Möglichkeit zum Reinigen von insbesondere geneigten Flächen zu schaffen.

Die Lösung dieser Aufgabe erfolgt durch die Merkmale des Anspruchs 1.

Erfindungsgemäß umfasst die Reinigungsvorrichtung einen Träger und wenigstens ein am Träger gehaltenes, angetriebenes Endlosreinigungsband.

Es hat sich in überraschender Weise herausgestellt, dass ein geeignet ausgebildetes Endlosreinigungsband nicht nur eine hervorragende Reinigungswirkung erzielen kann, sondern dass außerdem der nach Art eines Kettenfahrzeugs wie beispielsweise einer Raupe oder eines Panzer wirksame Vortrieb des Endlosbandes gerade an geneigten Flächen ausgenutzt werden kann, um den Benutzer während des Reinigungsvorgangs beim Halten bzw. Bewegen der Reinigungsvorrichtung zu entlasten. Durch geeignete Ausbildung des Endlosreinigungsbandes kann die "Kletterfähigkeit" der Vorrichtung auf der jeweiligen geneigten Fläche so eingestellt werden, dass die jeweils wirksame Hangabtriebskraft gerade kompensiert wird. Der Benutzer muss dann lediglich für die Querbewegung der Vorrichtung sorgen. Da beim Reinigen von Schrägflächen sinnvoller Weise von oben nach unten gearbeitet wird, kann das Endlosreinigungsband auch derart ausgebildet werden, dass die Hangabtriebskraft leicht überwiegt, so dass der Benutzer nur eine geringe Kraft aufbringen muss, um bei einem solchen "zeilenweisen" Reinigen die Höhe der Vorrichtung zu halten, wobei zum Reinigen der nächst tieferen Zeile der leicht überwiegenden Hangabtriebskraft einfach nachgegeben werden kann.

Weitere bevorzugte Ausgestaltungen der Erfindung sind in den abhängigen Ansprüchen, der Beschreibung sowie der Zeichnung angegeben.

Vorzugsweise ist eine Fluidzufuhreinrichtung vorgesehen, die z.B. an einen separaten Hochdruckreiniger anschließbar ist. Zumindest ein Teil der Fluidzufuhreinrichtung kann in den Träger integriert sein. Auf diese Weise ist es möglich, das Reinigungsfluid, bei dem es sich insbesondere um Wasser handelt, entweder unmittelbar auf die zu reinigende Fläche an einer dann mittels des Endlosreinigungsbandes zu bearbeitenden Stelle oder auf das Endlosreinigungsband aufzubringen.

Die Möglichkeit zur Nutzung eines ohnehin vorhandenen separaten Hochdruckreinigers macht die erfindungsgemäße Reinigungsvorrichtung gerade auch für private Haushalte interessant.

Gemäß einem weiteren Ausführungsbeispiel der Erfindung ist eine mit dem Träger verbundene Halteeinrichtung vorgesehen, wobei die Halteeinrichtung und der Träger gegeneinander verschwenkbar sind. Ein Vorteil dieser Verschwenkbarkeit besteht darin, dass die Reinigungsvorrichtung problemlos für unterschiedliche Dachneigungen eingesetzt werden kann.

Ferner können die Halteeinrichtung und der Träger um zwei verschiedene Achsen gegeneinander verschwenkbar sein. Die beiden Achsen verlaufen insbesondere senkrecht zueinander. Die verschwenkbare Ausgestaltung zwischen Halteeinrichtung und Träger kann beispielsweise nach dem bei Hausstaubsaugern bekannten Prinzip erfolgen. Ein Verdrehen der Halteeinrichtung um ihre Längsachse führt demgemäß zu einer Drehung der Reinigungsvorrichtung um eine im Wesentlichen senkrecht oder bevorzugt nur leicht geneigt zur zu reinigenden Fläche verlaufende Achse, und aufgrund des Antriebs des Endlosreinigungsbandes ergibt sich insgesamt eine Seitwärtsbewegung der Vorrichtung auf der jeweiligen Fläche. Der Benutzer verfügt somit gewissermaßen über eine "selbstfahrende" Reinigungsvorrichtung, die lediglich einer kraftschonenden Führung bzw. Richtungsumsteuerung bedarf.

Demgemäß kann die Halteeinrichtung eine Längsachse aufweisen, wobei eine Verschwenkbarkeit des Trägers relativ zur Halteeinrichtung um die Längsachse der Halteeinrichtung unterbunden ist.

Gemäß einem weiteren Ausführungsbeispiel der Erfindung ist zumindest ein Teil einer Fluidzufuhreinrichtung in die Halteeinrichtung integriert. Insbesondere kann die Halteeinrichtung ein ein- oder mehrteiliges Halterohr umfassen, das nicht nur vom Benutzer dazu verwendet werden kann, die Reinigungsvorrichtung während des Reinigungsvorgangs zu halten und gegebenenfalls zu steuern, sondern über das außerdem die Zufuhr des Reinigungsfluids insbesondere von einem separaten Hochdruckreiniger möglich ist. Anders herum betrachtet kann also vorgesehen sein, dass in eine Halteeinrichtung der Reinigungsvorrichtung zumindest ein Teil einer Fluidzufuhreinrichtung integriert ist.

Die Halteeinrichtung und/oder die Fluidzufuhreinrichtung kann gleichzeitig dazu benutzt werden, der Reinigungsvorrichtung elektrischen Strom zuzuführen, was beispielsweise dann erforderlich ist, wenn der Träger für den Antrieb des Endlosreinigungsbandes ein oder mehrere Elektromotoren umfasst. Alternativ oder zusätzlich zu einem derartigen Bandantrieb kann der Träger mit anderen elektrischen Einrichtungen versehen sein, beispielsweise einer oder mehreren Fluidpumpen.

Generell ist von Vorteil, wenn das Eigengewicht der Reinigungsvorrichtung möglichst gering ist. So wird gemäß einem weiteren Ausführungsbeispiel der Erfindung vorgeschlagen, dass der Antrieb für das Endlosreinigungsband mittels eines zugeführten Reinigungsfluids erfolgt. Ein zusätzlicher Elektromotor für den Bandantrieb kann dann entfallen. Die Umsetzung eines zugeführten, unter Druck stehenden Fluids in eine Antriebsbewegung ist aus dem Stand der Technik grundsätzlich bekannt. Selbst im Niederdruckbereich von beispielsweise bis zu etwa 5 bar kann selbst für eine solche Reinigungsvorrichtung der erfindungsgemäßen Art, die auf geneigten Gebäudedächern eingesetzt werden soll, eine ausreichend hohe Antriebskraft zur Verfügung gestellt werden. Das Reinigungsfluid wird dabei ein oder mehreren Treibdüsen zugeführt, die einen Fluidstrahl auf eine turbinen- oder propellerartige Antriebseinheit richten, um auf diese Weise den Fluidstrahl in eine Drehbewegung umzusetzen. Hohe Drehzahlen von mehreren tausend Umdrehungen pro Minute lassen sich auf diese Weise erzielen. Mittels eines nachgeordneten Getriebes kann hieraus eine beispielsweise für das erfindungsgemäße Endlosreinigungsband geeignete Drehzahl abgeleitet werden. Ein reiner Fluidantrieb für das Endlosreinigungsband ist erfindungsgemäß möglich, aber nicht zwingend.

In einem weiteren Ausführungsbeispiel der Erfindung sind wenigstens zwei am Träger gehaltene Endlosreinigungsbänder vorgesehen. Dabei kann vorgesehen sein, dass die beiden Bänder unabhängig voneinander antreibbar sind. Nach dem Prinzip eines Fahrantriebs für Kettenfahrzeuge kann auf diese Weise eine beliebig steuerbare Reinigungsvorrichtung geschaffen werden, die auch auf nicht oder nur wenig geneigten Flächen in einer beliebig durch den Benutzer steuer- bzw. fernsteuerbaren Weise umherfahren kann.

Gemäß einem weiteren bevorzugten Ausführungsbeispiel ist der Träger in Modulbauweise vorgesehen. Bevorzugt ist der Träger in Abhängigkeit von der Art und/oder der Anzahl der Trägermodule in unterschiedlichen Arbeitslängen - in Bezug auf die Längserstreckung des Endlosreinigungsbandes gesehen - konfigurierbar.

Hierdurch ergibt sich der Vorteil, dass die Reinigungsvorrichtung an die Messungen der jeweils zu reinigenden Module von Solar- bzw. Photovoltaikanlagen angepasst werden kann. Das Endlosreinigungsband kann entweder in unterschiedlichen Arbeitslängen vorliegen oder aus einer Mehrzahl von in geeigneter Weise untereinander verbindbaren Einzelbandabschnitten zur jeweils gewünschten Arbeitslänge zusammengesetzt werden. Für ein solches Reinigungssystem kann aus einem Pool unterschiedlicher Trägermodule der für die jeweilige Anwendung benötigte Träger zusammengesetzt werden, wobei insbesondere dieser Pool wenigstens ein Umlenk- und/oder Spannmodul für das Band, wenigstens ein Antriebsmodul für das Band, wenigstens ein Stützmodul für das Band und/oder wenigstens ein Verlängerungsmodul umfasst.

Besonders einfach hinsichtlich Handhabung und Aufbau ist eine gemäß einem weiteren Ausführungsbeispiel vorgeschlagene Modulbauweise, wonach jedes Modul ein rohr- oder hülsenförmiges Basiselement umfasst, das zur Kopplung der Module untereinander ausgebildet ist. Die einzelnen Rohr- bzw. Hülsenstücke können beispielsweise einfach zusammengesteckt und/oder miteinander verrastet werden. Die jeweiligen Funktionselemente wie beispielsweise Antriebsmotor, Antriebsritzel, Umlenkritzel oder Stützrolle können in geeigneter Weise fest oder auswechselbar mit einem ansonsten einheitlich ausgebildeten Basiselement verbunden sein. Hierdurch kann sich ein Grundaufbau einer erfindungsgemäßen Reinigungsvorrichtung ergeben, der - anschaulich ausgedrückt - an den Körperbau einer Stabheuschrecke erinnert.

In einem weiteren Ausführungsbeispiel ist die Reinigungsvorrichtung mit einer Führungs- und Halteeinrichtung einer Solar- oder Photovoltaikanlage oder einer Solar- oder Photovoltaikanlagenfläche koppelbar.

Diese Ausgestaltung der erfindungsgemäßen Reinigungsvorrichtung bezieht sich insbesondere auf eine Verwendung der Reinigungsvorrichtung, bei welcher ein Benutzer diese nicht mehr von Hand halten und führen muss. Vielmehr geht es hier um eine automatische bzw. selbstfahrende Reinigungsvorrichtung, die zu diesem Zweck an der Anlage bzw. der jeweils zu reinigenden Fläche gehalten und geführt ist. Wenn die Reinigungsvorrichtung in Betrieb gesetzt wird, was zu vorgegebenen Zeitpunkten oder bei Bedarf erfolgen kann, dann bewegt sich die Reinigungsvorrichtung - in einer durch die Führungs- und Halteeinrichtung an der Anlage bzw. der zu reinigenden Fläche geführten und gehaltenen Weise - von selbst längs der zu reinigenden Fläche. Ähnliche automatische Systeme sind in Verbindung mit Reinigungsbürsten grundsätzlich bekannt. Ein besonderer Vorteil der erfindungsgemäßen, wenigstens ein angetriebenes Endlosreinigungsband aufweisenden Vorrichtung besteht darin, dass das Endlosreinigungsband für einen überraschend wirkungsvollen Abtransport des Schmutzes sorgt. Hierbei ist unter "Schmutz" beispielsweise auch Schnee zu verstehen, von welchem die jeweils zu reinigende Fläche befreit werden soll.

Die Reinigungsvorrichtung kann mit einem Elektromotor versehen sein, dessen Stromversorgung durch Solarzellen gewährleistet ist. Alternativ kann die Solar- oder Photovoltaikanlage bzw. die jeweilige Fläche oder die Führungs- und Halteeinrichtung mit einem Stromanschluss versehen sein, mit dem die Reinigungsvorrichtung permanent über ein geeignet geführtes Kabel verbunden ist oder an den die Reinigungsvorrichtung bei Bedarf, z.B. in einer Ruhe- oder Parkstellung, "andocken" kann. In analoger Weise kann ein Fluidanschluss vorgesehen sein, mit dem es beispielsweise möglich ist, einen an der Reinigungsvorrichtung vorhandenen Fluidtank bei Bedarf zu füllen.

Insbesondere handelt es sich bei den zu reinigenden Flächen um gerade, langgestreckte Streifen. Ein Umkehren der Reinigungsvorrichtung an den Streifenenden kann beispielsweise durch eine geeignete Sensorik sichergestellt werden. Sobald das Ende erreicht ist, wird die Reinigungsvorrichtung umgesteuert, um ihre Bewegung in die Gegenrichtung fortzusetzen.

Die Erfindung betrifft außerdem eine Solar- oder Photovoltaikanlage mit wenigstens einer, insbesondere gegenüber der Horizontalen geneigten, Fläche und zumindest einer Führungs- und Halteeinrichtung für eine Reinigungsvorrichtung der hier beschriebenen Art. Außerdem betrifft die Erfindung ein System aus wenigstens einer solchen Solar- oder Photovoltaikanlage sowie zumindest einer solchen Reinigungsvorrichtung. Vorzugsweise ist die Reinigungsvorrichtung automatisch und/oder selbstfahrend betreibbar.

Des Weiteren ist es bevorzugt, wenn die Reinigungsvorrichtung derart mit der Anlage bzw. der zu reinigenden Fläche zusammenwirkt, dass das Endlosreinigungsband etwa senkrecht zur Längserstreckung der zu reinigenden Fläche verläuft, wobei aber eine gewisse Schrägstellung vorhanden ist, um auf diese Weise eine Bewegungskomponente in Richtung der Längserstreckung der zu reinigenden Fläche zu erzielen. Wenn die Reinigungsvorrichtung mehr als ein Endlosreinigungsband aufweist, kann eine solche Bewegungskomponente alternativ oder zusätzlich durch einen gezielten Antrieb der Endlosreinigungsbänder erfolgen, insbesondere durch eine Geschwindigkeitsdifferenz zwischen zumindest zwei Endlosreinigungsbändem.

Die Erfindung wird im Folgenden beispielhaft unter Bezugnahme auf die Zeichnung beschrieben. Es zeigen:
- Fig. 1: verschiedene Ansichten eines Ausführungsbeispiels einer erfindungsgemäßen Reinigungsvorrichtung,
- Fig. 2: eine Ansicht der Reinigungsvorrichtung von Fig. 1 mit einigen weggelassenen Bauteilen,

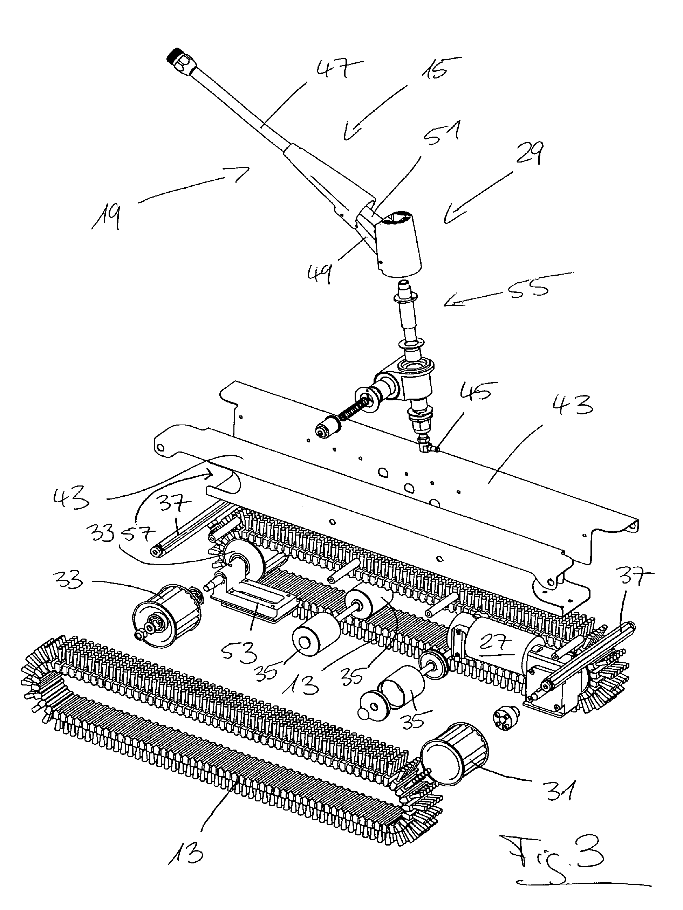

- Fig. 3: eine Explosionsansicht der Reinigungsvorrichtung von Fig. 1, und
- Fig. 4: eine schematische Ansicht einer Ausgestaltung der Erfindung mit automatisch betreibbarer Reinigungsvorrichtung.

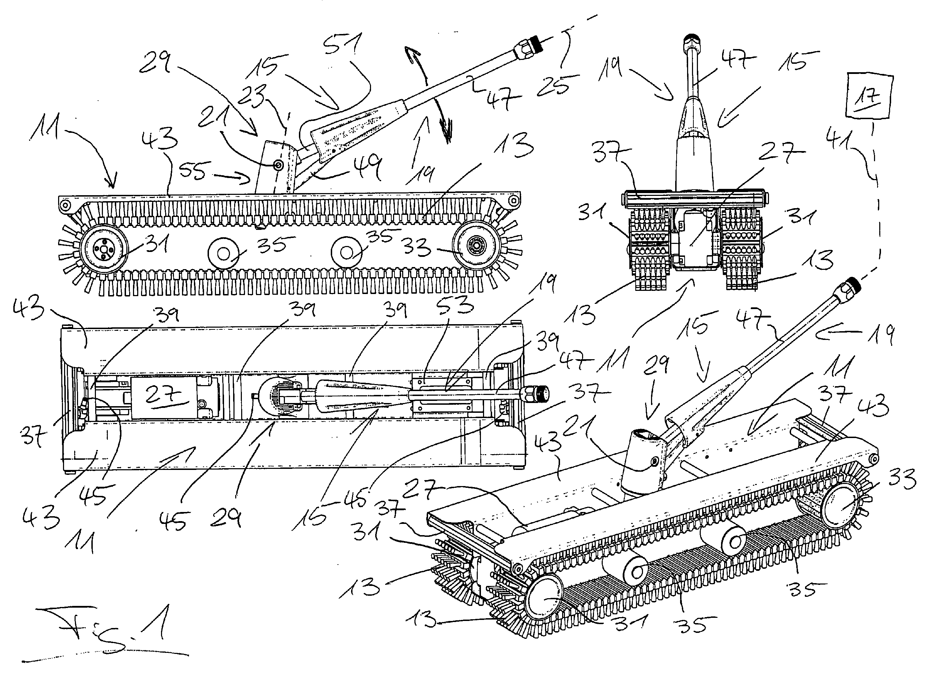

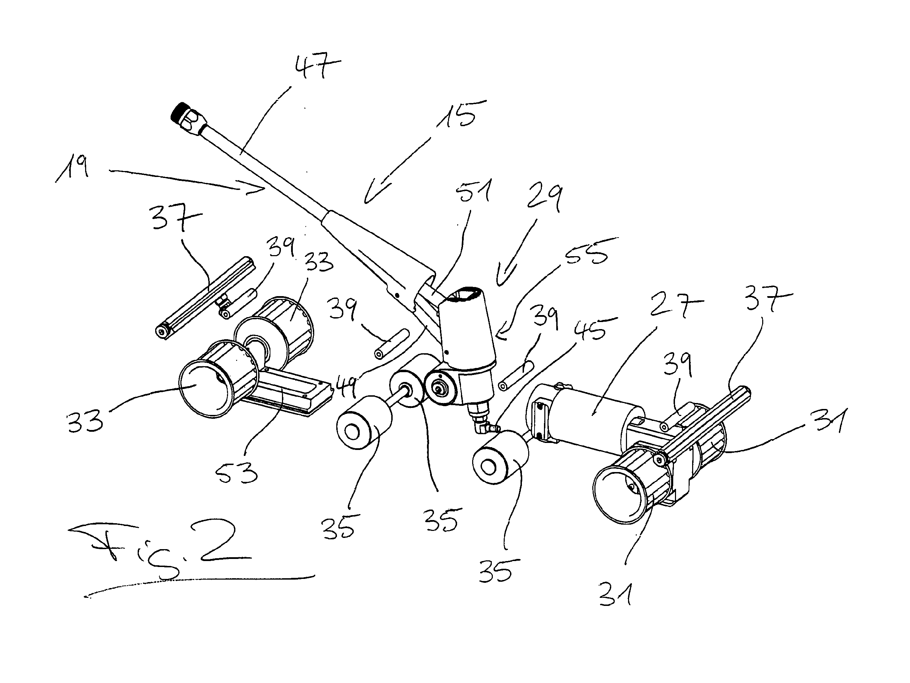

Bei dem in den Fig. 1 und 2 dargestellten Ausführungsbeispiel einer erfindungsgemäßen Reinigungsvorrichtung umfasst der in Fig. 2 aus Anschaulichkeitsgründen weggelassene Träger 11 zwei insbesondere aus Blech hergestellte Wandelemente 43, die jeweils abgewinkelt sind, wobei die beiden einander zugewandten Seitenteile der Wandelemente 43 durch stabförmige Verbinder 39 miteinander verbunden sind.

Die oberen Teile der Wandelemente 43 bilden jeweils eine Abdeckung für ein mit Borsten versehenes Endlosreinigungsband 13.

Wie bei einem Kettenfahrzeug laufen die Endlosbänder 13 jeweils über ein Antriebsritzel 31 sowie ein frei drehbares Umlenkritzel 33, wobei dazwischen Stützrollen 35 vorgesehen sind. Die Halterung dieser Ritzel und Rollen erfolgt mittels der senkrechten Seitenwände der Trägerelemente 43.

Mit den Antriebsritzeln 31 ist ein gemeinsamer Elektromotor 27 gekoppelt, der ebenfalls am Träger 11 gehaltert ist.

Ein Reinigungsfluid, insbesondere Wasser, wird der Reinigungsvorrichtung über eine Fluidzufuhreinrichtung 15 zugeführt, auf die nachstehend näher eingegangen wird. Anschlüsse 45 der Fluidzufuhreinrichtung 15 einerseits und endseitig angebrachter Fluidaustrittsbalken 37 andererseits sind durch nicht dargestellte, insbesondere schlauchartig ausgebildete Fluidleitungen miteinander verbunden. Aus den Fluidaustrittsbalken 37 tritt das Reinigungsfluid im Bereich der Endlosreinigungsbänder 13 aus. Alternativ kann ein Fluidaustritt über die gesamte Länge der Fluidaustrittsbalken 37 vorgesehen sein. Eine Abgabe des Fluids unmittelbar auf eine zu reinigende Fläche ist ebenfalls alternativ oder zusätzlich möglich.

Die Fluidzufuhreinrichtung 15 umfasst eine ebenfalls am Träger 11 gehalterte Gelenkeinheit 29 mit einer Säule 55, zu der das Fluid über ein Anschlussstück 47 gelangt und die vom Fluid durchströmt wird. Über das Anschlussstück 47 kann die Reinigungsvorrichtung mit einer Fluidzufuhrleitung 41 z.B. in Form eines Schlauches verbunden werden, die wiederum an einen herkömmlichen Hochdruckreiniger 17 angeschlossen werden kann, wie es in Fig. 1 schematisch dargestellt ist.

In die Gelenkeinheit 29 gelangt das Fluid von dem Anschlussstück 47 über einen insbesondere als Schlauch ausgebildeten Leitungsabschnitt 49. Alternativ oder zusätzlich kann das Fluid auch über den Abschnitt 51 geführt werden, der in Verlängerung des Anschlussstücks 47 dieses gelenkig an den Gelenkabschnitt 29 anbindet. Auf diese Weise ist das Anschlussstück 47 um eine Schwenkachse 21 relativ zu der am Träger 11 gehalterten Säule 55 verschwenkbar. Die Säule 55 wiederum ist relativ zum Träger 11 um eine Achse 23 verschwenkbar, die senkrecht zur Achse 21 verläuft.

Die Umlenkritzel 33 sind an einem Spannträger 53 angebracht, der in Richtung der Längserstreckung der Endlosreinigungsbänder 13 am Träger 11 verstellbar ist und in unterschiedlichen Stellungen am Träger 11 fixiert werden kann, um auf diese Weise die Endlosreinigungsbänder 13 zu spannen. Hierzu sind die Wandelemente 43 des Trägers 11 jeweils mit einer endseitig offenen Aussparung 57 versehen.

In der dargestellten Ausführungsform sind die Endlosreinigungsbänder 13 ausschließlich mit einer Reinigungsbeborstung versehen. Diese Beborstung ist bevorzugt derart ausgebildet, dass für eine oder mehrere bestimmte Dachneigungen das jeweils gewünschte Verhältnis zwischen Vortriebskraft und Hangabtriebskraft gegeben ist, wie es im Einleitungsteil diskutiert wird. Alternativ können die Endlosreinigungsbänder 13 zusätzlich zu den Borsten mit Haft- bzw. Vortriebselementen versehen sein, die nicht zur Reinigung der Fläche beitragen, sondern dazu dienen, der Reinigungsvorrichtung einen jeweils gewünschten Halt auf einer geneigten zu reinigenden Fläche zu verleihen.

In einer alternativen Ausführungsform der Erfindung kann die Reinigungsvorrichtung mit lediglich einem einzigen Endlosreinigungsband versehen sein. Die verschiedenen Funktionseinrichtungen wie insbesondere der Antriebsmotor, die Ritzel, die Rollen sowie die Fluidzufuhr sind dann in entsprechend abgewandelter Weise anzuordnen.

Die Endlosreinigungsbänder können zusätzlich mit Abstreif- oder "Skimmer"-Einrichtungen, versehen sein, die dazu dienen, an der Beborstung haften bleibenden Schmutz zu entfernen und in geeigneter Weise entweder aufzufangen oder gezielt abzugeben. Hierdurch kann in vorteilhafter Weise Reinigungsfluid gespart werden, welches andernfalls möglicherweise benötigt wird, um den Schmutz ab- bzw. wegzuspülen.

Während in dem vorstehend erläuterten Ausführungsbeispiel der Träger im Wesentlichen die beiden aus Blech gefertigten Wandelemente 43 umfasst, kann in einer alternativen Ausgestaltung der Träger aus einer Mehrzahl von rohr- oder hülsenförmigen Basiselementen aufgebaut sein, die lösbar miteinander verbunden werden können, um auf diese Weise dem Benutzer die Möglichkeit zu geben, Reinigungsvorrichtungen unterschiedlicher Länge zu realisieren. Hierdurch wird in besonders einfacher und vorteilhafter Weise ein Modulaufbau realisiert. Die einzelnen Basiselemente können von vornherein als Funktionselemente ausgestaltet oder so ausgebildet sein, dass sie mit den einzelnen Funktionselementen, wie insbesondere dem Antriebsmotor, den Ritzeln, den Rollen und Einrichtungen zur Fluidzufuhr, versehen werden können. Der Querschnitt derartiger Module kann kreisförmig sein, wobei dies aber nicht zwingend ist. Module mit quadratischem oder rechteckigem Querschnitt sind ebenfalls denkbar.

Eine derartige erfindungsgemäße Reinigungsvorrichtung in Modulbauweise kann gemäß einem insbesondere vorgegebenen Raster an übliche Feldgrößen von Solar- bzw. Photovoltaikanlagen angepasst werden, um insbesondere eine effiziente "zeilenweise" Reinigung zu ermöglichen.

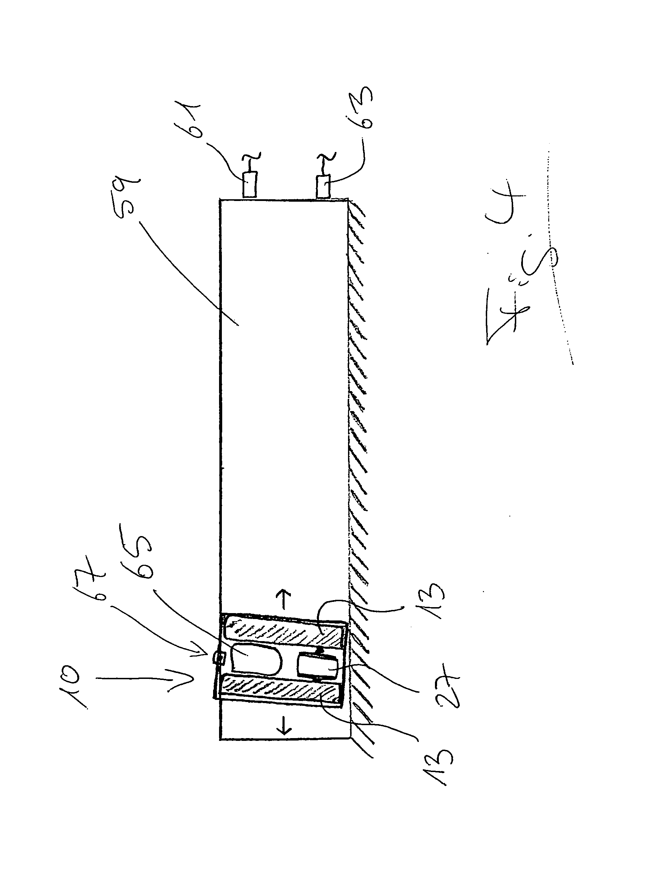

Fig. 4 zeigt schematisch eine erfindungsgemäße Reinigungsvorrichtung 10, die an einer zu reinigenden Fläche 59 einer Solar- oder Photovoltaikanlage gehalten und geführt ist. Hierzu ist eine Führungs- und Halteeinrichtung 67 vorgesehen. Es kann sich hierbei zum Beispiel um eine Schienen- oder Stangenführung handeln, in welche die Reinigungsvorrichtung 10 beispielsweise eingehängt ist. Die Reinigungsfläche 59 ist geneigt zur Horizontalen angeordnet, wobei die Führungs- und Halteeinrichtung 67 am oberen Ende der Fläche 59 angeordnet ist, so dass sich eine die Schwerkraft nutzende hängende Anordnung der Reinigungsvorrichtung 10 ergibt.

Wie im Einleitungsteil erläutert, kann durch entsprechende Ausgestaltung der Führungs- und Halteeinrichtung 67 und/oder durch ein Antriebskonzept bezüglich der Endlosreinigungsbänder 13 erreicht werden, dass trotz für eine wirkungsvolle Reinigung vorteilhafter näherungsweise senkrechter Anordnung der Endlosreinigungsbänder 13 zur Längserstreckung der streifen- bzw. zeilenförmigen zu reinigenden Fläche 59 eine Bewegungskomponente der Reinigungsvorrichtung 10 in Richtung der Längserstreckung der Fläche 59 resultiert, wie es durch die beiden Pfeile in Fig. 4 angedeutet ist.

Eine Umkehr der Reinigungsvorrichtung 10 an den Enden der Fläche 59 kann beispielsweise durch Berührungs- oder Näherungsschalter erfolgen. Die Ausdehnung bzw. Abmessung der zu reinigenden Fläche 59 kann auch eingelernt werden, wobei eine hier nicht dargestellte zentrale Steuerungseinrichtung für einen vollautomatischen Betrieb der Reinigungsvorrichtung 10 zum Reinigen der Fläche 59 sorgen kann. Die Reinigungsvorrichtung 10 kann aber auch z.B. drahtlos von einem Benutzer ferngesteuert werden.

Zur Strom- und Fluidversorgung der Reinigungsvorrichtung 10 können - wie Fig. 4 zeigt - an einem Ende der Fläche 59 entsprechende Anschlüsse 61, 63 vorgesehen sein, an welche die Reinigungsvorrichtung 10 bei Bedarf "andocken" kann. In einer solchen Park- bzw. Versorgungsstellung kann ein an der Reinigungsvorrichtung 10 vorgesehener Fluidtank 65 z.B. mit Wasser gefüllt werden. Ein nicht dargestellter Akku für den Elektromotor 27 der Reinigungsvorrichtung 10 kann aufgeladen werden.

Alternativ kann die Stromversorgung des Elektromotors 27 auch durch an der Reinigungsvorrichtung 10 angebrachte Solarzellen erfolgen.

Möglich ist auch eine Versorgung der Reinigungsvorrichtung 10 mit Strom und/oder Fluid über die Führungs- und Halteeinrichtung 67, die zu diesem Zweck z.B. eine wie auch immer geartete Stromschiene für einen Stromabnehmer der Reinigungsvorrichtung 10 aufweisen kann. -.-.-.

### Bezugszeichenliste

- 10: Reinigungsvorrichtung
- 11: Träger
- 13: Endlosreinigungsband
- 15: Fluidzufuhreinrichtung
- 17: Hochdruckreiniger
- 19: Halteeinrichtung
- 21: Schwenkachse
- 23: Schwenkachse
- 25: Längsachse
- 27: Motor
- 29: Gelenkeinheit
- 31: Antriebsritzel
- 33: Umlenkritzel
- 35: Stützrolle
- 37: Fluidaustrittsbalken
- 39: Verbinder
- 41: Fluidzufuhrleitung
- 43: Wandelement
- 45: Anschluss
- 47: Anschlussstück
- 49: Leitungsabschnitt
- 51: Abschnitt
- 53: Spannträger
- 55: Säule
- 57: Aussparung
- 59: Solar- bzw. Photovoltaikanlage
- 61: Fluidanschluss
- 63: Stromanschluss
- 65: Fluidtank
- 67: Führungs- und Halteeinrichtung

## Patentansprüche

1. Vorrichtung zum Reinigen von insbesondere geneigten Flächen, insbesondere von Solar- oder Photovoltaikanlagenflächen auf Dächern von Gebäuden, mit einem Träger (11) und wenigstens einem am Träger (11) gehaltenen, angetriebenen Endlosreinigungsband (13).

2. Vorrichtung nach Anspruch 1,
**dadurch gekennzeichnet,**
**dass** eine Fluidzufuhreinrichtung (15) vorgesehen ist, die bevorzugt an einen separaten Hochdruckreiniger (17) anschließbar ist.

3. Vorrichtung nach Anspruch 1 oder 2,
**dadurch gekennzeichnet,**
**dass** eine mit dem Träger (11) verbundene Halteeinrichtung (19) vorgesehen ist, wobei die Halteeinrichtung (19) und der Träger (11) gegeneinander verschwenkbar sind.

4. Vorrichtung nach Anspruch 3,
**dadurch gekennzeichnet,**
**dass** die Halteeinrichtung (19) und der Träger (11) um zwei verschiedene, insbesondere senkrecht zueinander verlaufende, Achsen (21, 23) gegeneinander verschwenkbar sind.

5. Vorrichtung nach Anspruch 3 oder 4,
**dadurch gekennzeichnet ,**
**dass** die Halteeinrichtung (19) eine Längsachse (25) aufweist und eine Verschwenkbarkeit des Trägers (11) relativ zur Halteeinrichtung (19) um die Längsachse (25) der Halteeinrichtung (19) unterbunden ist.

6. Vorrichtung nach einem der Ansprüche 3 bis 5,
**dadurch gekennzeichnet ,**
**dass** zumindest ein Teil einer Fluidzufuhreinrichtung (15) in die Halteeinrichtung (19) integriert ist.

7. Vorrichtung nach einem der vorhergehenden Ansprüche,
**dadurch gekennzeichnet ,**
**dass** der Antrieb für das Band (13) mittels eines zugeführten Reinigungsfluids erfolgt.

8. Vorrichtung nach einem der vorhergehenden Ansprüche,
**dadurch gekennzeichnet ,**
**dass** für den Antrieb des Bandes (13) wenigstens ein integrierter Motor (27) vorgesehen ist, insbesondere ein Elektromotor.

9. Vorrichtung nach einem der vorhergehenden Ansprüche,
**dadurch gekennzeichnet,**
**dass** wenigstens zwei am Träger (11) gehaltene, insbesondere unabhängig voneinander antreibbare Endlosreinigungsbänder (13) vorgesehen sind.

10. Vorrichtung nach einem der vorhergehenden Ansprüche,
**dadurch gekennzeichnet ,**
**dass** der Träger (11) in Modulbauweise vorgesehen und bevorzugt in Abhängigkeit von Art und/oder Anzahl der Trägermodule in unterschiedlichen Arbeitslängen konfigurierbar ist.

11. Vorrichtung nach einem der vorhergehenden Ansprüche,
**dadurch gekennzeichnet ,**
**dass** der Träger (11) wenigstens ein Antriebsmodul für das Band (13), wenigstens ein Umlenk- und/oder Spannmodul für das Band (13), wenigstens ein Stützmodul für das Band (13) und/oder wenigstens ein Verlängerungsmodul umfasst.

12. Vorrichtung nach einem der vorhergehenden Ansprüche,
**dadurch gekennzeichnet ,**
**dass** jedes Modul ein rohr- oder hülsenförmiges Basiselement zur Koppelung der Module untereinander umfasst.

13. Vorrichtung nach einem der vorhergehenden Ansprüche,
**dadurch gekennzeichnet ,**
**dass** sie mit einer Führungs- und Halteeinrichtung (67) einer Solar- oder Photovoltaikanlage oder einer Solar- oder Photovoltaikanlagenfläche (59) koppelbar ist.

14. Solar- oder Photovoltaikanlage mit wenigstens einer, insbesondere gegenüber der Horizontalen geneigten, Fläche (59) und zumindest einer Führungs- und Halteeinrichtung (67) für eine Reinigungsvorrichtung (10) nach einem der vorhergehenden Ansprüche.

15. System aus wenigstens einer Solar- oder Photovoltaikanlage nach Anspruch 14 und zumindest einer Reinigungsvorrichtung (10) nach einem der Ansprüche 1 bis 13, wobei bevorzugt die Reinigungsvorrichtung (10) automatisch und/oder selbstfahrend betreibbar ist.
